# EUROPEAN PATENT APPLICATION

(11) **EP 1 267 574 A2**
(43) Date of publication of application: **18.12.2002**
(21) Application number: 01307936.3
(22) Date of filing: 18.09.2001
(51) Int. Cl.: H04N 5/57

(54) **Video display apparatus**

(30) Priority: 14.06.2001 KR 2001033597
(71) Applicant: Samsung Electronics Co., Ltd., Suwon-city, Kyungki-do (KR)
(72) Inventor: Kang, Ho-woong, Suji-eup, Yongin city, Kyungki-do (KR)
(74) Representative: Geary, Stuart Lloyd

(57) **Abstract**

Disclosed is a display apparatus having a display part (3), comprising an amplifying part (5) for amplifying an input picture signal and transmitting it to the display part (3), a clock signal generating part (20) for generating a clock signal in synchronism with at least one of vertical and horizontal synchronising signals transmitted together with the input picture signal, and a controller (10) for controlling the brightness and/or contrast of the displayed image in synchronism with the vertical and/or horizontal synchronising signals.

## Description

The present invention relates in general to a video display apparatus.

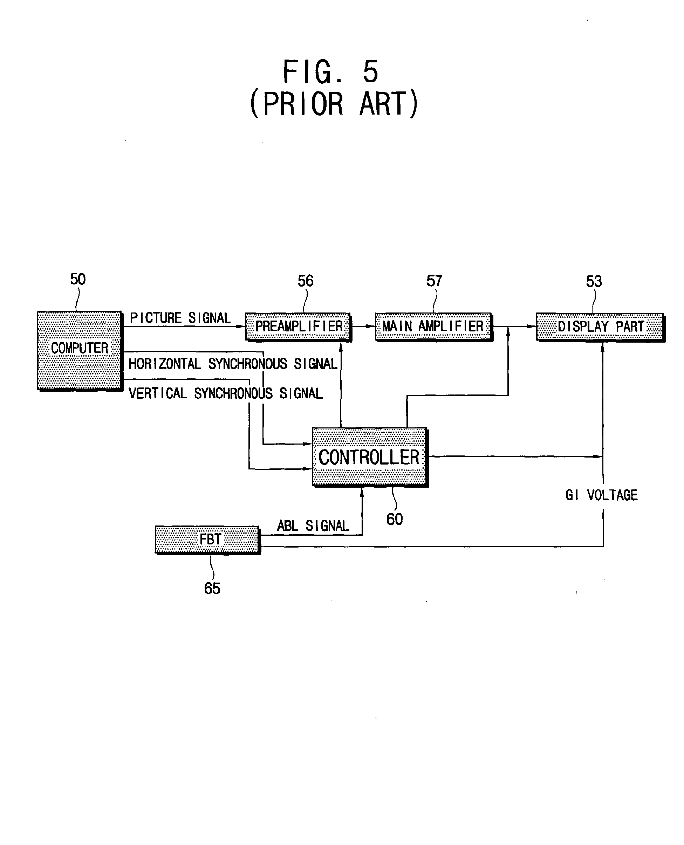

Referring to Figure 5, a known display apparatus comprises a plurality of signal amplifiers 56, 57 for amplifying a picture signal from a computer 50, a display part 53 for displaying the picture signal amplified by the signal amplifiers 56, 57, an FBT (flyback transformer) 65, which generates an ABL (auto brightness limit) signal for controlling the gains of the signal amplifiers 56, 57 and supplies high voltage to an electron gun, and a controller 60 for generating vertical and horizontal blank signals, according to the picture signal and vertical and horizontal synchronizing signals from the computer 50.

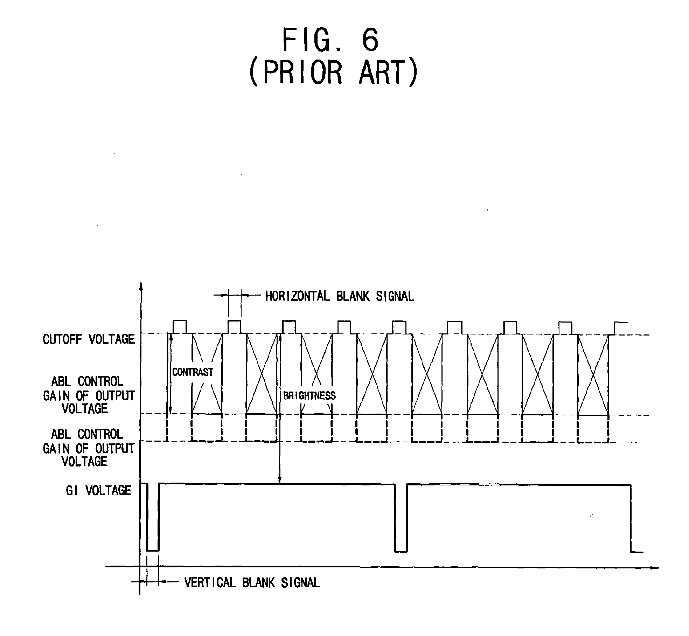

Referring to Figure 6, the display apparatus outputs a horizontal waveform signal through the signal amplifiers 56, 57 and a vertical waveform signal generally at voltage G1. The amplitude of the horizontal waveform output voltage controls the contrast of the display apparatus. The greater the amplitude of the horizontal waveform output voltage is, the sharper the contrast is. Conversely, the smaller the amplitude of the horizontal waveform output voltage is, the weaker the contrast is. Brightness is controlled according to a difference between the horizontal cutoff voltage and the vertical G1 voltage. The smaller the voltage difference is, the higher the brightness is. Conversely, the greater the voltage difference is, the lower the brightness is.

In comparison with a television set, the display apparatus is located relatively near a user in use and operated at a relatively high frequency. Thus, in order to lengthen the life span of the display apparatus and to protect users' eyes, the contrast and the brightness of the display apparatus are generally set up at a relatively low value, compared with televisions.

However, when the display apparatus displays a moving picture, it is neither clear nor bright, because of the low value of the contrast and the brightness. Recently, various moving pictures have become available to users via the Internet. Thus, a user wants to watch clear and bright moving pictures, as with televisions.

A video display apparatus according to the present invention is characterised by control means configured to control the contrast or brightness of a displayed image in synchrony with the horizontal and/or vertical periods of the video signal controlling the display.

Preferably, the control means comprises contrast control means including a variable gain amplifier for amplifying an image component of said video signal, the contrast control means being configured to vary the gain of said amplifier in dependence on said horizontal and/or vertical periods. More preferably, clock signal generating means responsive to the horizontal and/or vertical synchronising signals associated with said video signal is included and the contrast control means is responsive to a clock signal from said clock signal generating means to control the gain of said amplifier.

Preferably, the control means comprises brightness control means including a reference voltage generator for generating a brightness control voltage, the reference voltage generator being configured to vary said brightness control voltage in dependence on said horizontal and/or vertical periods. More preferably, clock signal generating means responsive to the horizontal and/or vertical synchronising signals associated with said video signal is included and the reference voltage generator is responsive to a clock signal from said clock signal generating means to control the said brightness control voltage.

Embodiments of the present invention will now be described, by way of example, with reference to Figures 1 to 4 of the accompanying drawings, in which:-
Figure 1 is a block diagram of a display apparatus according to the present invention;
Figure 2 shows the waveform of the picture signal in the display apparatus of Figure 1 of a first embodiment of the present invention;
Figure 3 shows the waveform of the picture signal in the display apparatus of Figure 1 of a second embodiment of the present invention;
Figure 4 shows the waveform of the picture signal in the display apparatus of Figure 1 of a third embodiment of the present invention;
Figure 5 is a block diagram of a known display apparatus; and
Figure 6 shows the waveform of a conventional picture signal.

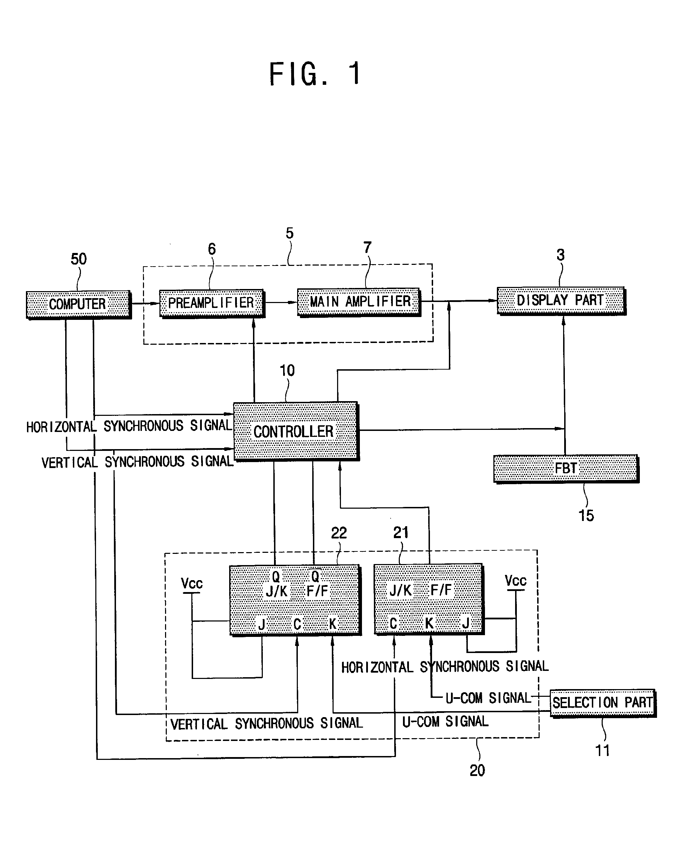

Referring to Figure 1, a display apparatus according to the present invention comprises a display part 3 on which a picture signal from the computer 50 is displayed, an amplifying part 5 for amplifying the picture signal by a predetermined factor, an FBT 15 for supplying a high voltage to an electron gun (not shown), a clock signal generating part 20 for generating a clock signal in synchronism with at least one of vertical and horizontal synchronizing signals supplied together with the picture signal, and a controller 10 for adjusting the brightness and contrast of the display part 3 by controlling the output voltage from the amplifying part 5 and the FBT 15 when a moving picture signal is input by controlling the current supplied according to an ABL signal from the FBT 15.

The display apparatus also comprises a separate selection part 11 for selecting a moving picture mode allowing a picture to be clearer and brighter than in a normal mode. As the selection part 11, a separate key may be installed, or an existing key installed on the display apparatus for use with an OSD (on screen display) function may be used.

The amplifying part 5 includes a preamplifier 6 and a main amplifier 7 which are connected in sequence. The preamplifier 6 is a low voltage amplifier, which can amplify a low voltage picture signal to a predetermined voltage picture signal, according to a selection by means of the selection part 11 by a user. The preamplifier 6 amplifies the picture signal with two gains according to whether the normal mode (gain= ~5 to 7 as per conventional preamplifier) or the moving picture mode (gain= ~7) has been selected. On the other hand, the main amplifier 7 amplifies the picture signal amplified by the preamplifier 6 so as to provide a voltage which allows the picture signal to be displayed on the display part 3, and has a gain of about 10.

The clock signal generating part 20 includes first and second signal generators 21 and 22 respectively generating clock signals, according to the periods of the horizontal and vertical synchronizing signals of the picture signal, and operates when the moving picture mode is selected by means of the selection part 11. The first signal generator 21 generates a clock signal to be supplied to the preamplifier 6, and the second signal generator 22 generates a clock signal to be supplied to the preamplifier 6 along with a clock signal to adjust the G1 voltage. To the first signal generator 21 are input the horizontal synchronizing signal and a signal (u-COM) selected by means of the selection part 11, and to the second signal generator 22 are input the vertical synchronizing signal and a signal (u-COM) selected by means of the selection part 11.

The controller 10, operating the clock signal generator part 20, adjusts the brightness and contrast of the screen by controlling the G1 voltage of the electron gun and the preamplifier 6 according to the clock signals generated by the first and second signal generators 21 and 22, when the moving picture mode is selected by a user using the selection part 11. The controller 10 can adjust the brightness and contrast of the screen according to the period of the horizontal synchronizing signal, the period of the vertical synchronizing signal, and the periods of both the horizontal and vertical synchronizing signals.

Methods of adjusting the picture signal according to the periods of the respective synchronizing signals will be described by way of example.

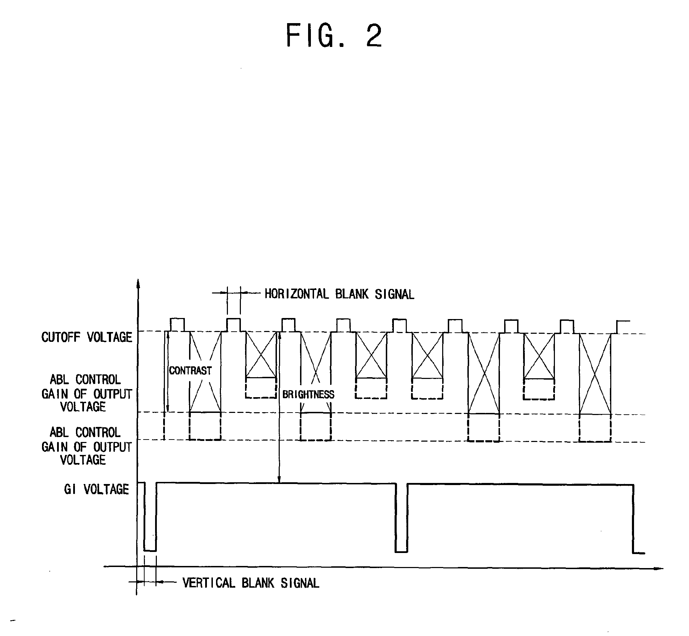

In the case of adjusting the picture signal according to the period of the horizontal synchronizing signal, when the moving picture mode is selected using the selection part 11, the first signal generator 21 generates the clock signal according to the period of the horizontal synchronizing signal. The controller 10 transmits a control signal to the preamplifier 6 so as to alternately apply the respective amplification rates according to the normal mode and the moving picture mode by allowing the clock signal generated from the first signal generator 21 to be synchronous with the period of the horizontal synchronous signal. That is, the picture signal is amplified with a gain selected according tothe moving picture mode for one period of the horizontal synchronizing signal and then the picture signal is amplified with the gain according to the normal mode for the next period of the horizontal synchronizing signal. Thus, as shown in Figure 2, the contrast is sharp for one period of the horizontal synchronizing signal because the amplitude of the horizontal waveform output voltage is increased, but becomes weak for the next period of the horizontal synchronizing signal because the amplitude of the horizontal waveform output voltage is decreased.

In the first frame, the controller 10 applies the gain according to the moving picture mode to every odd period, and the gain according to the normal mode to every even period. In the next frame, the controller applies the gain according to the normal mode to every odd period, and the gain according to the moving picture mode to every even period. As described above, the gain is alternately increased and decreased according to the period of the horizontal synchronizing signal, so that the contrast becomes very sharp and the overload applied to components of the display apparatus is decreased.

Now, in the case of adjusting the picture signal according to the period of the vertical synchronising signal, the controller 10 operates the second signal generator 22, transmits the control signal to the preamplifier 6 according to the clock signal from the second signal generator 22, and controls the voltage output from the FBT 15. That is, the controller 10 controls the G1 voltage output from the FBT 15 and the gain of the preamplifier 6, according to the vertical synchronizing signal.

For one period of the vertical synchronizing signal, the controller 10 controls the FBT 15 to set the G1 voltage below a predetermined voltage and the preamplifier 6 to amplify the picture signal with the gain according to the moving picture mode. As a result, the difference between the G1 voltage and the cutoff voltage is increased and the brightness is decreased, whereas the gain of the horizontal waveform output voltage is increased and the contrast becomes sharp.

If the period of the vertical synchronizing signal is over and the next frame comes, the controller 10 controls the FBT 15 to set the G1 voltage beyond a predetermined voltage and the preamplifier 6 to amplify the picture signal with the gain according to the normal mode, for the next period of the vertical synchronizing signal. As a result, the difference between the G1 voltage and the cutoff voltage is decreased and the brightness is increased, whereas the gain of the horizontal waveform output voltage is decreased and the contrast becomes weak.

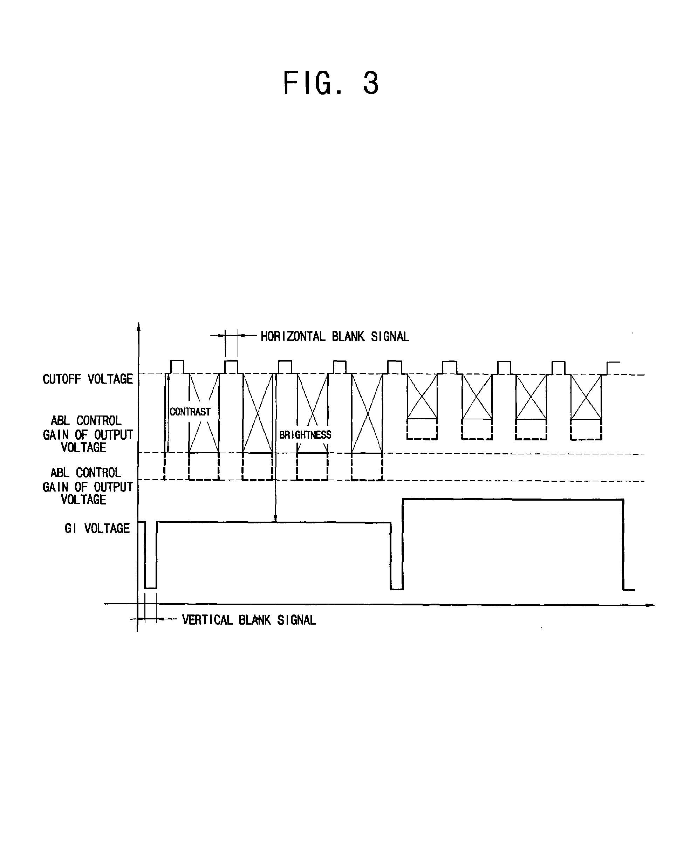

That is, as shown in Figure 3, if the picture signal is adjusted according to the period of the vertical synchronizing signal by means of only the second signal generator 22, the contrast is sharp for one period of the vertical synchronous signal, namely one frame, and the brightness is increased for the next period of the vertical synchronizing signal.

Finally, in the case of adjusting the picture signal according to the periods of both the horizontal and vertical synchronizing signals, the controller 10 generates the clock signals by means of both the first and the second signal generators 21, 22. Then, the controller 10 controls the preamplifier 6 with the clock signal from the first signal generator 21 for every period of the horizontal synchronizing signal and the G1 voltage from the FBT 15 with the clock signal from the second signal generator 22 for every period of the vertical synchronizing signal.

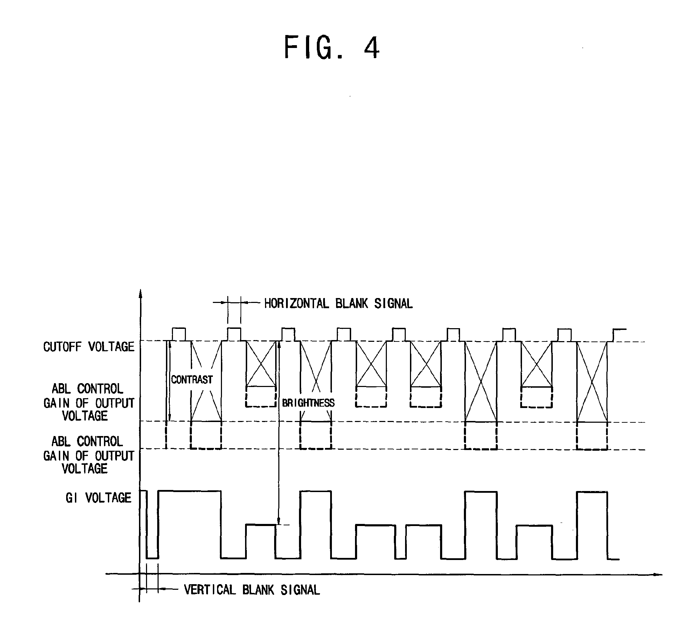

That is, the controller 10 controls the preamplifier 6 to alternately apply the gains according to the normal mode and the moving picture mode to every period of the horizontal synchronizing signal. Then, the preamplifier 6 amplifies the picture signal with the gain according to the moving picture mode for one period of the horizontal synchronizing signal and with the gain according to the normal mode for the next period of the horizontal synchronising signal. Thus, as shown in Figure 4, the amplitude of the horizontal waveform output voltage is increased because the moving picture mode is applied for one period of the horizontal synchronous signal, so that the contrast becomes sharp. Conversely, the amplitude of the horizontal waveform output voltage is decreased because the normal mode is applied for the next period of the horizontal synchronizing signal, so that the contrast becomes weak.

Furthermore, the controller 10 controls the G1 voltage output from the FBT 15 with the clock signal from the second signal generator 22. The controller 10 does not control the G1 voltage output from the FBT 15 according to the vertical synchronizing signal, but according to the horizontal synchronizing signal. The controller 10 raises the G1 voltage and increases the brightness for one period of the horizontal synchronizing signal during which the contrast becomes sharp as the amplitude of the output voltage is increased by the preamplifier 6, and lowers the G1 voltage and decreases the brightness for the next period of the horizontal synchronizing signal during which the contrast becomes weak as the amplitude of the output voltage is decreased by the preamplifier 6.

If the contrast becomes sharp and the brightness is increased as the amplitude of the output voltage and the G1 voltage are raised for every odd period of the horizontal synchronizing signal, and the contrast becomes weak and the brightness is decreased for every even period of the horizontal synchronizing signal, in the first frame, the contrast becomes weak and the brightness is increased for every odd period of the horizontal synchronizing signal, and the contrast becomes sharp and the brightness is decreased for every even period of the horizontal synchronizing signal, in the next frame.

In addition, the embodiment in Figure 4 shows that the contrast becomes sharp and the brightness is increased according to the period of the horizontal synchronizing signal, but the contrast and the brightness may be respectively weak and increased, or sharp and decreased.

With this configuration, according to the present invention, the clock signal generator 20, generating the clock signal according to the period of the horizontal or vertical synchronous signal, and the gain of the preamplifier 6 and the G1 voltage of the FBT 15 are adjusted in synchronism with the clock signal generated from the clock signal generator, thereby allowing the contrast and the brightness to be alternately adjusted according to the period of the horizontal or vertical synchronizing signals. Thus, the picture on the screen is clearly and brightly displayed in the moving picture mode. Moreover, the contrast and the brightness are alternately adjusted according to the periods of the horizontal and the vertical synchronizing signals, thereby decreasing overloading of the circuits and the components of the display apparatus. Therefore, it is possible to prevent the life span of the display apparatus from being shortened.

In the above description, in order to control the picture signal with the horizontal synchronizing signal, the gain of the preamplifier 6 is adjusted. However, an ABL circuit may be employed for controlling the picture signal.

As described above, according to the present invention, clear and bright moving pictures can be displayed, and the life span of the display apparatus can be lengthened.

## Claims

1. A video display apparatus **characterised by** control means (6, 10, 15, 20, 50) configured to control the contrast or brightness of a displayed image in synchrony with the horizontal and/or vertical periods of the video signal controlling the display.

2. An apparatus according to claim 1, wherein the control means comprises contrast control means (10, 20, 6) including a variable gain amplifier (6) for amplifying an image component of said video signal, the contrast control means being configured to vary the gain of said amplifier (6) in dependence on said horizontal and/or vertical periods.

3. An apparatus according to claim 2, including clock signal generating means (20) responsive to the horizontal and/or vertical synchronising signals associated with said video signal, wherein the contrast control means is responsive to a clock signal from said clock signal generating means (20) to control the gain of said amplifier (6).

4. An apparatus according to claim 1, 2 or 3, wherein the control means comprises brightness control means (10, 20) including a reference voltage generator (10) for generating a brightness control voltage (G1), the reference voltage generator (10) being configured to vary said brightness control voltage (G1) in dependence on said horizontal and/or vertical periods.

5. An apparatus according to claim 5, including clock signal generating means (20) responsive to the horizontal and/or vertical synchronising signals associated with said video signal, wherein the reference voltage generator (10) is responsive to a clock signal from said clock signal generating means (20) to control the said brightness control voltage (G1).

6. A display apparatus having a display part, comprising:
an amplifying part amplifying an inputted picture signal and transmitting it to the display part;
a clock signal generating part generating a clock signal in synchronization with at least one of vertical and horizontal synchronous signals transmitted together with the inputted picture signal; and
a controller controlling the amplifying part to adjust an amplification rate so that brightness is alternately changed within a predetermined limit according to at least one of periods of the horizontal and vertical synchronous signals, synchronizing with the clock signal generated from the clock signal generating part.

7. The display apparatus according claim 6, further comprising an electron gun emitting electron beams for displaying the inputted picture signal on the display part, and an FBT supplying high voltage to the electron gun;
wherein the controller adjusts output voltage from the FBT so that brightness is alternately changed within a predetermined limit in synchronization with the clock signal generated from the clock signal generating part.

8. The display apparatus according claim 7, wherein the controller adjusts the amplification rate of the amplifying part and voltage from the FBT in order to alternately change the brightness and contrast of the display part, according to the period of horizontal synchronous signal synchronizing with the clock signal generated from the clock signal generating part.

9. The display apparatus according to claim 6, wherein the clock signal generating part includes a first signal generator generating a clock signal according to the horizontal synchronous signal of the picture signal, and a second signal generator generating a clock signal according to one of the vertical and horizontal synchronous signals of the picture signal.

10. The display apparatus according to claim 9, wherein the controller adjusts the contrast of the picture signal by increasing and decreasing the amplification rate of the amplifying part according to the period of the horizontal synchronous signal, synchronizing with the clock signal generated from the first signal generator.

11. The display apparatus according to claim 10, wherein the controller raises the voltage and increases the brightness for one period of the vertical synchronous signal synchronizing with the clock signal generated from the clock signal generating part, and lowers the voltage and decreases the brightness for the next period thereof.

12. The display apparatus according to claim 11, wherein the controller lowers the amplification rate of the amplifying part and makes the contrast weak for one period of the vertical synchronous signal, and raises the amplification rate the amplifying part and make the contrast sharp for the next period thereof.

13. The display apparatus according to claim 14, wherein the controller receives the clock signals generated from the first and second signal generators, and alternately increases and decreases the amplification rate of the amplifying part according to the period of the horizontal synchronous signal' along with the voltage.

14. The display apparatus according to claim 13, wherein the controller raises the voltage so as to increase the brightness of the picture signal for every even turn of the period of the horizontal synchronous signal in one period of the vertical synchronous signal, and lowers the voltage so as to decrease the brightness of the picture signal for every even turn of the period of the horizontal synchronous signal in the next period of the vertical synchronous signal.

15. The display apparatus according to claim 14, wherein the controller decreases the amplification rate of the amplifying part so as to make the contrast for every even turn of the period of the horizontal synchronous signal in one period of the vertical synchronous signal, and increases the amplification rate of the amplifying part so as to make the contrast sharp for every even turn of the period of the horizontal synchronous signal in the next period of the vertical synchronous signal.

16. The display apparatus according to claim 15, wherein the controller respectively raises and increases the voltage and the amplification rate of the amplifying part so as to increase the brightness and to make the contrast of the picture signal sharp for every even turn of the period of the horizontal synchronous signal in one period of the vertical synchronous signal, and respectively lowers and decreases the voltage and the amplification rate of the amplifying part so as to decrease the brightness and to make the contrast of the picture signal weak for every even turn of the period of the horizontal synchronous signal in the next period of the vertical synchronous signal.

17. The display apparatus according to claim 6, further comprising a selection part for selecting a moving picture mode;
wherein the controller operates the signal generating part when the moving picture mode is selected through the selection part.
